# EUROPEAN PATENT APPLICATION

(11) **EP 1 710 763 A1**
(43) Date of publication of application: **11.10.2006**
(21) Application number: 05007803.9
(22) Date of filing: 08.04.2005
(51) Int. Cl.: G07F 19/00

(54) **System and method for authorizing electronic payment transactions**

(71) Applicant: First Data Corporation, Greenwood Village, CO 80111 (US)
(72) Inventor: Kubo, Dr. Takayuki, 71083 Herrenberg (DE); Albrecht, Norbert, 16341 Panketal (DE)
(74) Representative: Beyer, Andreas

(57) **Abstract**

A transaction authorization system comprises an authorization engine (18) configured to perform an analysis in relation to a received request for authorization of a first-type electronic payment transaction and generate an authorization output based on the analysis. A first database (24) is for storing a transaction record in relation to one or more first-type payment transactions, each transaction record in the first database including a payor account identifier and time information. A second database (22) stores a plurality of transaction records for second-type electronic payment transactions, each transaction record in the second database including a payor account identifier and time information. A valuation engine (26) is configured to access the second database (22) to determine whether the second database has registered therein one or more second-type payment transactions having the same payor account as, and a later time than, a selected first-type payment transaction recorded in the first database (24), and derive and store valuation information based on a result of the determination.

## Description

The present invention relates to a system and method for authorizing electronic payment transactions.

As used herein, the term "payment transaction" is to be understood as referring to an action or set of actions having as its goal the electronic transfer of money or other values from a payor's account to a payee's account. "Electronic transaction" means a transaction that is conducted, in whole or in part, by electronic means or electronic records. The transaction may be conducted using wireless and/or wired communications technology. For example, the Internet, a public switched telephone network, a wide area network, a local area network, a virtual private network, and other types of communications networks and/or links may be utilized for performing an electronic payment transaction.

Electronic payment transactions frequently require authorization by a designated entity prior to execution of the transaction. The authorization entity may perform some form of analysis related to the requested transaction and, depending on the result of the analysis, render a decision whether to decline or authorize the payment transaction. The quality of the analysis is determinative of the error rate of the decision. That is, the better the analysis, the smaller the number of transactions that were erroneously approved and also the smaller the number of transactions that were erroneously declined.

Erroneous decisions by a payment transaction authorization entity may give rise to increased signal traffic and data processing. For example, erroneous approval of a payment transaction request may result in reversal of the authorized transaction after execution thereof. Reverse transactions stemming from erroneous authorizations cause additional signal traffic and consume additional processing time and resources in the communications and data processing infrastructure used for processing electronic payment transactions. In view of the finite computing and routing capacity of existing computer network systems, there is a high desire to keep unnecessary signal traffic and data processing caused by erroneous decisions of a payment transaction authorization entity low.

It is therefore an object of the present invention to provide a transaction authorization system and a method of operating such system which allow to achieve improved decision reliability to thereby prevent increased load on existing computing and network resources.

In one aspect, the present invention provides a transaction authorization system, comprising:
- an authorization engine configured to perform an analysis in relation to a received request for authorization of a first-type electronic payment transaction and generate an authorization output based on the analysis,
- a first database for storing a transaction record in relation to one or more first-type payment transactions, each transaction record in the first database including a payor account identifier and time information,
- a second database storing a plurality of transaction records for second-type electronic payment transactions, each transaction record in the second database including a payor account identifier and time information, and
- a valuation engine configured to access the second database to determine whether the second database has registered therein one or more second-type payment transactions having the same payor account as, and a later time than, a selected first-type payment transaction recorded in the first database, and derive and store valuation information based on a result of the determination.

In another aspect, the present invention provides a method of operating a transaction authorization system, comprising the steps of:
- receiving a request for authorization of a first-type electronic payment transaction,
- performing an analysis in relation to the received authorization request based on the derived information,
- generating an authorization output based on the analysis,
- recording, in a first database, a transaction record in relation to one or more first-type payment transactions, each transaction record in the first database including a payor account identifier and time information,
- providing a second database storing a plurality of transaction records for second-type electronic payment transactions, each transaction record in the second database including a payor account identifier and time information,
- accessing the second database to determine whether the second database has registered therein one or more second-type payment transactions having the same payor account as, and a later time than, a selected first-type payment transaction recorded in the first database, and
- deriving and storing valuation information based on a result of the determination.

As used herein, first-type electronic payment transactions and second-type electronic payment transactions represent alternative manners of making an electronic payment.

In one embodiment of the present invention, at least one of the first-type and second-type electronic payment transactions is a card-initiated transaction where "card" refers to a card-shaped means of making electronic payments. Debit cards and credit cards are conventionally known examples of payment cards. The payment card may include, in computer-readable form, information identifying an account of the card holder. This information may be stored, e.g., in a magnetic strip provided on the card or a chip integrated into the card. Card terminals located at merchant sites may be configured to read the identification information from customer's payment cards.

Various payment methods have been devised and implemented on the basis of payment cards. Among them, a signature-based electronic debit payment method and an identification code-based electronic debit payment method have attained widespread acceptance by market participants. In identification code-based debit payment, the card holder enters a personal identification number (PIN) into a keypad or keyboard of a card terminal. In an online version of the PIN payment method, the PIN number is transmitted via an online connection to an electronic authorization center of the card issuing bank along with such information as an account identifier identifying the card holder's account and the amount due. The bank's authorization center checks the PIN number and also whether the account has sufficient funds to collect the requested amount. If the card is valid and sufficient funds are available, the authorization center effects payment, and an "ok" message is sent to the terminal. Otherwise, the authorization center declines payment. There is also known an offline version of PIN-based debit payment where the PIN number is checked by the card at the point of sale (POS) and may be checked, alternatively or additionally, by the authorization center of the card issuing bank at a later time not correlated with the time of input of the PIN by the card holder.

In signature-based debit payment, no PIN is entered by the card holder as confirmation of the payment. Instead, the card holder provides a signature on a receipt printed by the terminal. The terminal reads the card holder's account data from the card's magnetic strip or chip and stores the read information along with the amount due in a payment data set. This data set may thereafter be forwarded to the issuing bank of the debit card to collect the amount due from the card holder's account.

The above signature-based debit payment method may be enhanced by an online authorization check. To this end, the terminal sends a request message including the account data read from the debit card to an authorization entity which checks whether the requested transaction can be authorized. The authorization entity may hold a list of stolen or otherwise prohibited debit cards for which no payment approval must be allowed.

In the context of the present invention, a signature-based debit payment transaction and an identification code-based debit payment transaction represent a preferred embodiment of a first-type payment transaction and second-type payment transaction, respectively. A person versed in the art, however, will readily appreciate that other types of payment transactions may exist that can be likewise considered as first and second-type payment transactions. As a further debit payment method, for example, there is known a cardless method in which a payor uses a graphical user interface displayed on a display device of a computer terminal to enter his or her account information and confirms the payment electronically by clicking on a button or providing a digital signature. An electronic payment transaction occurring as part of such a cardless payment method may represent another embodiment of a first-type payment transaction in the context of the present invention. It is further to be noted that the present invention may find application also with respect to a payment method other than debit payment. For example, it is conceivable to apply the present invention for authorizing a cheque-based payment transaction as a first-type payment transaction.

An authorization system responsible for authorizing a payment transaction may have no, or no immediate, access to account information of a payor in the transaction. Decisions of the authorization system are then subject to uncertainty and may prove erroneous. For example, it may occur that an authorization system for signature-based debit payment transactions or other "PIN-less" payment transactions grants a payment request not knowing that the payor's account lacks sufficient funds. In such a case, a reverse transaction may follow in order to re-collect a balance that may have already been credited to the payee's account. It has been found that such reverse transactions may cause considerable signal traffic and consume considerable computing power in existing payment transaction processing infrastructure, which signal traffic and computing power could be saved and otherwise utilized if a more reliable authorization decision was available. Here, "authorization decision" generally refers to the decision output by the authorization system, whether positive, negative or anything between.

To achieve more reliable authorization decisions, the present invention provides the authorization system with a valuation capability enabling the system to assess retrospectively whether a decision was good or not. Based on the valuation result, the system may be designed, e.g., by programming, to automatically modify one or more checking parameters used in analyzing incoming authorization requests for first-type payment transactions.

The authorization system records in a first database respective data sets (transaction records) for first-type payment transactions requested with the system. The system may update the first database whenever a new request for a first-type payment transaction arrives, thus recording all first-type payment transactions requested with the system, whether approved or declined or otherwise decided. Alternately, the system may only record first-type payment transactions in the first database that received a specific decision, e.g., a rejection, or any of a sub-set of specific decisions from a larger overall set of possible decisions.

The transaction record for each registered first-type payment transaction includes a payor account identifier identifying an account of a payor in the respective first-type payment transaction, and time information. Preferably, the time information is indicative of a time of the respective first-type payment transaction. The time information may indicate about a time of reception of an authorization request for the transaction by the authorization system or a time of processing of the request or decision on the request by the authorization system. Alternately, the time information may indicate about a time when the authorization request was generated by or transmitted from a requesting system such as a card terminal at a merchant.

A valuation engine comprised in the authorization system of the present invention is arranged to access a second database which stores transaction records related to second-type electronic payment transactions such as, e.g., PIN-based debit payment transactions. Authorization requests for second-type payment transactions as are registered in the second database are decided by one or more further transaction authorization systems remotely located from the authorization system of the present invention. In one embodiment, such a further authorization system is one that has direct access to account information of a payor in a second-type payment transaction. For example, the further authorization system can be associated with an issuing bank of debit cards. Considering the fact that there may be numerous different card issuing banks each having an associated authorization center, one will readily appreciate that the second database may have registered therein second-type electronic payment transactions that were requested with different further authorization systems.

The transaction records stored in the second database include, for each registered second-type payment transaction, a payor account identifier identifying a payor in the respective second-type payment transaction, and time information. Similarly to the time information in the records of the first database, the time information in the records of the second database preferably indicates a time related to the generation or transmission of an authorization request for the respective transaction or the reception, processing or decision thereon by the respective further authorization system.

As part of the valuation process, the second database is accessed by the valuation engine to determine if the second database contains any records for "later" second-type payment transactions involving the same payor account as a selected "earlier" first-type payment transaction registered in the first database. The time information in the records of the first and second databases enables the valuation engine to determine which of a first-type payment transaction and a second-type payment transaction for the same payor account is "younger" and which is "older". The registration of a later second-type payment transaction in the second database allows to obtain a measure for the quality of a previous decision on an earlier first-type payment transaction for the same payor account by the authorization engine. For example, if the authorization engine declines an earlier first-type payment transaction and the valuation engine thereafter finds by querying the second database that a later second-type payment transaction for the same account was approved by a remote further authorization system, this may be interpreted by the valuation engine as indicating an erroneous decision regarding the declined first-type payment transaction. That is, the valuation engine may determine that approval of a later second-type payment transaction by a different authorization system indicates that a previous first-type payment transaction for the same account could have well been approved. Also for example, if the authorization engine approves an earlier first-type payment transaction and the valuation engine thereafter determines that the second database has registered therein a declined later second-type payment transaction for the same account, this may be interpreted by the valuation engine as indicating an erroneous decision as well. By so valuating the decisions of the authorization engine based on the content of the second database, the valuation engine is able to derive a measure for the decision quality of authorization engine. Using this measure, the valuation engine can automatically modify checking parameters used by the authorization engine in processing authorization requests for first-type payment transactions. It has been found that the use of history data for second-type payment transactions to valuate authorization decisions related to first-type payment transactions can greatly improve the reliability of such authorization decisions and consequently reduce overall signal traffic related to payment processing.

In a preferred embodiment, the valuation engine can repeatedly submit a query in relation to the payor account identified in the selected first-type payment transaction to the second database. In particular, the valuation engine may repeat submission of a query in relation to the payor account identified in the selected first-type payment transaction to the second database for a predetermined number of times or until a predetermined period of time has elapsed.

Each transaction record in the second database preferably includes a transaction request answer code, which may have been returned from a further transaction authorization system in response to an authorization request for the respective second-type payment transaction. The answer code may indicate the specific answer given by the further transaction authorization system. The valuation engine may then be configured to access the second database to obtain information on the transaction request answer code of one or more registered second-type payment transactions determined as having the same payor account as, and a later time than, the selected first-type payment transaction.

Each transaction record in the second database preferably further includes a transaction amount, which may be representative of a payment amount involved in the respective transaction. Advantageously, the valuation engine is configured to access the second database to obtain information on the transaction amount of one or more registered second-type payment transactions determined as having the same payor account as, and a later time than, the selected first-type payment transaction.

When registering a first-type payment transaction in the first database, the authorization system of the present invention preferably includes a transaction amount in the respective transaction record. The valuation engine may then compare the transaction amount of one or more registered second-type payment transactions determined as having the same payor account as, and a later time than, the selected first-type payment transaction with the transaction amount of the selected first-type payment transaction. Based on the result of the comparison, the valuation engine may derive, and store, information related to whether the selected first-type payment transaction was decided correctly or not.

In a preferred embodiment, the valuation engine is configured to access one or more stored checking parameters included in one or more predefined checking rules implemented in the authorization system and modify the accessed one or more checking parameters based on the valuation information. As understood herein, a checking rule may be invoked by the authorization engine for the purpose of checking a received authorization request for a first-type payment transaction and determining an authorization decision or may be invoked for the purpose of checking whether other checking information invoked by the authorization engine in the course of analyzing a received authorization request such as, e.g., a negative list of prohibited accounts need be modified, changed or updated. A checking parameter included in such a checking rule may represent, e.g., a threshold value, an allowable time difference, a weight, or the like.

The authorization system of the present invention may comprise a host configured to receive authorization requests for first-type payment transactions and second-type payment transactions, forward the authorization requests for first-type payment transactions to the authorization engine, and route the authorization requests for second-type payment transactions to a remote further transaction authorization system. The host is coupled to the second database and registers a transaction record for every requested second-type payment transaction in the second database.

A computer-readable information carrier medium in accordance with the present invention includes stored program code means adapted to effect, when executed by a computer, execution of one ore more steps of the methodology of the present invention. The information carrier medium may, e.g., be in the form of an optical or magnetic disk storing the program code means. The program code means can further be available in the form of electric or electromagnetic signals transmitted through wired or wireless media and representing a sequence of instructions forming the program code means.

The invention will be explained further in conjunction with the accompanying drawings, in which:

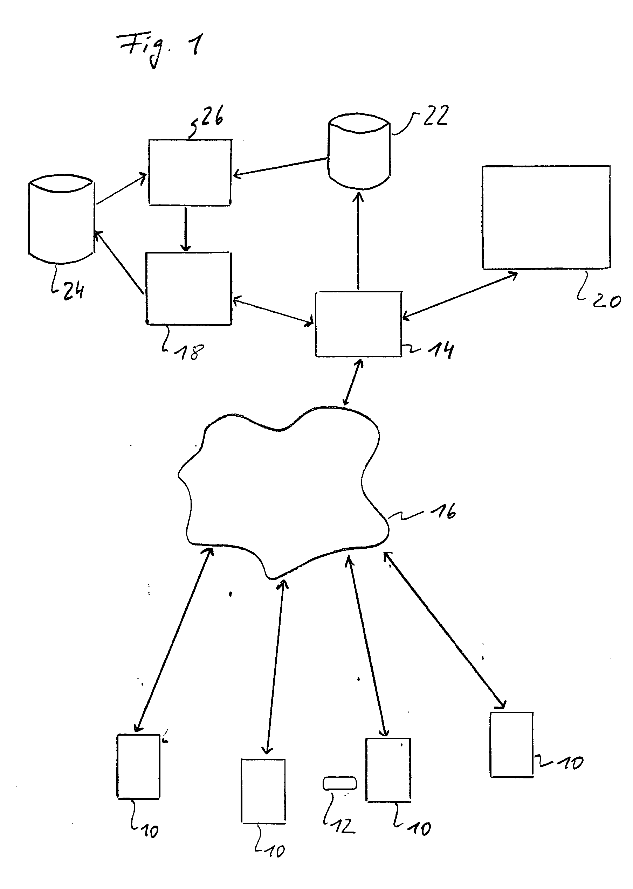

Fig. 1 illustrates a schematic block diagram of a portion of an exemplary architecture for processing electronic card payment transactions.

In Fig. 1, a plurality of card terminals 10 are depicted, which are configured to read stored information from a payment card such as schematically indicated at 12. The terminals 10 may be situated at a plurality of merchant sites. In a debit payment method, the read information may include account data consisting of an account number of the holder of the card and a bank identification code. The terminals 10 are communicably coupled to a host server 14 across a communications network 16. The host server 14 is communicably coupled to a first authorization engine 18 and one or more second authorization engines 20. The second authorization engines 20 are comprised in one or more remotely located further authorizations systems.

The communications network 16 may include, e.g., at least one of a land-line public switched telephone network, a mobile communications network such as according to the GMS or UTMS standard or any other conventionally known mobile communications standard, the Internet, a proprietary communications network, a wide area network, etc.

The term "engine" as used herein refers to a mechanism implemented by suitable hardware and/or software and designed to perform one or more predefined processes.

The first authorization engine 18 is destined to check incoming authorization requests for first-type payment transactions, whereas the one or more second authorization engines 20 are destined to check incoming authorization requests for second-type payment transactions. Such first-type and second-type payment transactions represent alternative ways of transferring a payment amount. The following description specifically envisages a scenario where signature-based debit card payment transactions are first-type payment transactions and PIN-based debit card payment transactions are second-type payment transactions. In such a scenario, the first authorization engine 18 may have no access to account information of debit card holders, while the one or more second authorization engines 20 have access to such account information, enabling them to determine whether a requested payment amount can be collected from a card holder's account.

One or more of the card terminals 10 may be configured to support signature-based debit card payment transactions only. One or more other card terminals 10 may be configured to support PIN-based debit card payment transactions only. Some of the card terminals 10 may be configured to support both signature-based debit card payment transactions and PIN-based debit card payment transactions.

In a signature-based debit card payment method with online authorization, a terminal 10 reads account data from a debit card and establishes a communication connection to the host server 14. The terminal transmits an authorization request message to the host server 14 via the communication connection. Included in the authorization request message are the account data read from the debit card and possibly further information. The host server 14 receives the authorization request message and forwards it to the first authorization engine 18. The first authorization engine 18 checks the authorization request online and returns a response message, which is transmitted via the host server 14 to the requesting terminal 10. The response message includes an authorization decision based on the result of the analysis performed by the first authorization engine 18.

As part of the analysis, the first authorization engine 18 may check the received authorization request against a negative list of prohibited debit cards and/or a positive list of eligible debit cards, for example. The first authorization engine 18 may further determine a score representative of a likelihood that the requested transaction will be successfully completed. The analysis performed by the first authorization engine 18 may futher involve the application of one or more checking rules that include one or more checking parameters. One such rule may, e.g., be whether the transaction amount specified in an incoming transaction request exceeds a predetermined limit. Another example rule may be whether the number of requested transactions for a specific account within in a specific period of time is below a predetermined maximum allowable number. Yet another example rule may be whether a specific probability determined in relation to the respective requested transaction is below or above a predetermined threshold. The predetermined limit, the predetermined maximum allowable number and the predetermined threshold are checking parameters in the above example rules.

After receipt of the response message from the first authorization engine 18, the terminal 10 or host server 14 may transmit a debit data set including all relevant transaction data to a bank's payment processing system to settle the outstanding debt. In case of insufficient funds on the card holder's account, the card issuing bank may electronically decline to debit the balance due to the card holder's account. This may result in the merchant's bank annulling a credit it may already have posted on the merchant's account. It will be easily appreciated by one of ordinary skill in the art that the signal traffic involved in such a reverse transaction could be avoided if the authorization decision from the first authorization engine 18 was more reliable.

In a PIN-based debit card payment method, a terminal 10 transmits an authorization request message to the host server 14 similarly to the signature-based debit card payment method. However, the authorization request message additionally includes a PIN as input by the card holder at the terminal. The host server 14 is programmed to route the message to the second authorization engine 20 (or, if plural second authorization engines 20 are provided, an appropriate one of the plural engines). The second authorization engine 20 checks the PIN and also whether the card holder has sufficient funds in his or her account. It returns a response message, which is transmitted via the host server 14 to the requesting terminal. Included in the response message from the second authorization engine 20 is an answer code that identifies a type of answer.

There may be defined a plurality of different answer codes. For example, an answer code 'AA' may indicate successful completion of the requested payment. An answer code 'AB' may indicate that the presented card is not registered with the bank operating the addressed second authorization engine. An answer code 'AC' may indicate that the bank code included in the transmitted information is not valid. An answer code 'AD' may indicate that the payment amount is inadmissibly high. An answer code 'AE' may indicate that the addressed second authorization engine has reason to assume some form of manipulation of the card. An answer code 'AF' may indicate that an incorrect PIN has been input. An answer code 'AG' may indicate that the card has expired. An answer code 'AH' may indicate a blocked card. An answer code 'AI' may indicate that an incorrect PIN has been input a maximum allowable number of, say, three times in a row. The answer codes 'AB' through 'AI' indicate rejection of the requested PIN-based payment transaction for one or the other reason, whereas answer code 'AA' indicates that the requested transaction was authorized.

It is to be understood that the above answer codes are merely given by way of example and are not intended to be limiting to the present invention. There may be defined numerous other answer codes having different meanings. The present invention envisages the use of answer codes that follow standard convention in the industry.

A database 22 is shown in Fig. 1 which stores a history log of PIN-based debit card payment transactions routed via the host server 14. In a preferred embodiment, the database 22 is maintained by the host server 14, which may update the database 22 whenever it receives an authorization request message for a new PIN-based debit card payment transaction. The database 22 is a second database in the sense of the claims.

The history log in the database 22 is comprised of a transaction record for each PIN-based debit card payment transaction. Each transaction record includes a plurality of transaction parameters related to the respective PIN-based transaction. These parameters include the answer code returned from the appropriate second authorization engine 20 and further such parameters as a transaction time, a transaction amount, a merchant type code, a merchant country code, a location of the requesting terminal, a terminal identification code, etc. Moreover, each transaction record includes account information of a payor in the respective PIN-based transaction. This account information may be comprised of the card holder's account number, a bank identification code, and possibly further data. Thus, the database 22 stores a plurality of data sets, each including details of a PIN-based debit card payment transaction.

The transaction time indicates a time of the transaction as may be determined by the card terminal reading the card or the second authorization engine 20. The transaction time will typically indicate at least a date and may have any suitable time resolution down to hours, minutes and even seconds.

The transaction amount indicates the amount of money or other value that is intended to be transferred by the requested transaction.

A further database 24 is shown in Fig. 1 which is used by the first authorization engine 18 for recording information on decided authorization requests for signature-based transactions therein. The database 24 is a first database in the sense of the claims. In one embodiment, whenever the first authorization engine 18 receives an authorization request for a signature-based transaction, it effects storage of a corresponding transaction record in the database 24. In another embodiment, registration of a signature-based transaction in the database 24 may depend on the authorization decision rendered by the first authorization engine 18. In such an embodiment, a signature-based transaction may only be registered in the database 24 if it received a specific authorization decision or one of a plurality of specific authorization decisions. For example, provision may be made that only declined signature-based transactions are registered in the database 24.

Each transaction record in the database 24 includes a plurality of transaction parameters related to the respective signature-based transaction. These parameters include at least a payor account identifier, a transaction time, and a transaction amount. The latter parameters preferably have the same meaning as the corresponding parameters in the transaction records in the database 22. The transaction records in the database 24 may further include one or more data elements indicating the type of authorization decision rendered by the first authorization engine 18, i.e., whether the transaction was approved, declined or decided otherwise.

A valuation engine 26 has a functionality of valuating (assessing) if an authorization decision rendered by the first authorization engine 18 in relation to a requested signature-based transaction can be regarded as good or must be regarded as erroneous. To this end, the valuation engine 26 is designed to access the databases 22, 24 and submit a query to the database 22 to determine if subsequent to a selected signature-based transaction registered in the database 24 a PIN-based transaction for the same account (card) was registered in the database 22. In particular, the valuation engine 26 is designed to repeatedly submit a corresponding query to the database 22 until a predetermined period of time has elapsed from the transaction time of the selected signature-based transaction as given in the transaction record thereof.

In one embodiment, at least every signature-based transaction that is declined by the first authorization engine 18 is recorded in the database 24, and the valuation engine 26 queries the database 24 for any new registration of a declined signature-based transaction. If the valuation engine 26 receives information that a declined signature-based transaction has been newly registered in the database 24, it submits a query to the database 22. The query is for determining if the database 22 contains any later PIN-based transactions for the same account (card) as the signature-based transaction to which the query refers (i.e., the selected signature-based transaction). Herein, a transaction is later than another transaction if its transaction time indicates a later time than that of the other transaction.

If the response to the query reveals that the database 22 has registered therein a later PIN-based transaction for the same account (card) as that of a newly registered declined signature-based transaction, this indicates that the card was used - or at least an attempt was made to use the card - for making a PIN-based debit payment after an authorization request for a signature-based debit payment transaction was rejected for that card. Through the answer code and the transaction amount of the later PIN-based transaction, the valuation engine 26 can determine if the signature-based transaction, which had been declined by the first authorization engine 18, could have actually been approved. To give an example, if it is determined that the later PIN-based transaction was approved, i.e., received a "good" answer code (e.g., code 'AA'), and the transaction amount was not substantially smaller than that of the declined signature-based transaction, this indicates a likelihood that the signature-based transaction could have been successfully completed as well. In such a case, the valuation engine 26 may determine that the decision of the first authorization engine 18 to decline the particular signature-based transaction was erroneous, and may store information related to this determination in suitable memory. Storing information related to the determination may simply consist in incrementing an internal counter of the valuation engine 26. The count of the counter can thus be representative of a total number of erroneous authorization rejections by the first authorization engine 18.

On the other hand, if it is determined that a subsequent PIN-based transaction to a selected declined signature-based transaction for the same account was likewise declined, i.e., received a "bad" answer code (e.g., code 'AB'), and the transaction amount in the PIN-based transaction was substantially smaller than that of the declined signature-based transaction, this indicates that the decision to decline the signature-based transaction can be considered correct. In such a case, the valuation engine 26 may increment another internal counter used for counting a total number of correct authorization rejections by the first authorization engine 18.

The query submitted from the valuation engine 26 to the database 22 includes suitable data identifying the payor account (card) of the selected signature-based transaction and the transaction time of the transaction. The data identifying the payor account (card) and the transaction time are taken or derived from the corresponding transaction record in the database 24.

The query to the database 22 may further include a transaction amount for use as a further search criterion. In this case, the database 22 is searched for later PIN-based transactions for the same account (card) as a selected signature-based transaction that have a transaction amount that satisfies one or more predetermined conditions with respect to the transaction amount included in the query. One predetermined condition can, e.g., be that the transaction amount of a candidate PIN-based transaction must be equal to or greater than the transaction amount included in the query. Alternately, there may be defined as a condition that the transaction amount of a candidate PIN-based transaction is at least a certain percentage of the transaction amount indicated in the query. Advantageously, the transaction amount in the query is the same as, or is derived from, the transaction amount of the selected signature-based transaction as recorded in the database 24.

Alternatively or additionally to the indication of a transaction amount in the query, the query may indicate one or more answer codes. In this case, the database 22 is searched for later PIN-based transactions for the same account (card) as a selected signature-based transaction that have a answer code that is the same as the answer code included in the query or, in the case of plural answer codes being submitted in the query, corresponds to one of the submitted answer codes.

In an alternate embodiment, the valuation engine 26 may be programmed or otherwise arranged not to submit a transaction amount or an answer code in the query. In such an embodiment, the information returned from the database 22 to the valuation engine 26 includes the transaction amount and also the answer code of any PIN-based transaction(s) determined as satisfying the account and time criteria of the query. The valuation engine 26 compares the retrieved transaction amount with the transaction amount of the selected signature-based transaction and further examines the retrieved answer code.

The valuation engine 26 is designed to query the database 22 repeatedly in relation to a selected signature-based transaction. In particular, the valuation engine 26 may repeat submission of a query at a predetermined interval until a predetermined maximum period of time has elapsed. The predetermined interval may, for example, be one hour, one day, or one week. The predetermined maximum period of time may indicate a maximum allowable time difference between the transaction time of the selected signature-based transaction and that of a later PIN-based transaction. The maximum period of time may be one week or one month, for example.

In view of the great number of electronic payment transactions occurring everyday in the modern world, it is preferred that the valuation engine 26 submits queries to the database 22 collectively for a plurality of accounts (cards) in a batch process during hours of less authorization traffic such as at nighttimes.

The valuation engine 26 provides an adjustment mechanism for modifying one or more checking parameters such as exemplified above based on information resulting from the valuation of a plurality of declined signature-based debit payment transaction. Based on the counted numbers of correctly declined signature-based transactions and erroneously declined signature-based transactions, the valuation engine 26 can determine a ratio of these numbers to thereby obtain a measure for the decision reliability of the first authorization engine 18. The valuation engine 26 is preferably designed to modify one or more checking parameters based on this measure. In particular, the valuation engine 26 may compare the measure obtained from the counted numbers of correct and erroneous signature-based transactions with a reference value and modify the one or more checking parameters based on a deviation between the obtained measure and the reference value. The reference value may be predefined and stored in the valuation engine 26. Alternately, the valuation engine 26 may be designed to derive the reference value from reference data. By modifying one or more checking parameters based on information derived from valuating a plurality of declined signature-based transactions, the authorization decisions of the first authorization engine 18 can be given greater reliability, thereby allowing for a reduction in overall signal traffic in communications networks.

Alternatively or additionally, the valuation engine 26 may use the result of the valuation of a single signature-based transaction for modifying certain checking data such as a negative or positive list. If it is found, for example, that a successful PIN-based debit payment transaction occurred for a specific account within a predetermined period of time of, say, one month after a declined signature-based debit payment transaction for that account and the transaction amount of the PIN-based debit payment transaction was the same or higher than that of the declined signature-based debit payment transaction, the valuation engine 26 may initiate a modification of the checking data so that an approval will be issued by the first authorization engine 18 on a future authorization request for a signature-based debit payment transaction for that account. In the case of a negative list of prohibited debit cards, for example, the valuation engine 26 may effect removal of a specific card from the list upon detection of a successful later PIN-based debit payment transaction for that card. At the same time, the valuation engine 26 may effect addition of an entry for the card to the list upon detection of a failed later PIN-based transaction for the card.

## Claims

1. A transaction authorization system, comprising:
- an authorization engine (18) configured to perform an analysis in relation to a received request for authorization of a first-type electronic payment transaction and generate an authorization output based on the analysis,
- a first database (24) for storing a transaction record in relation to one or more first-type payment transactions, each transaction record in the first database including a payor account identifier and time information,
- a second database (22) storing a plurality of transaction records for second-type electronic payment transactions, each transaction record in the second database including a payor account identifier and time information, and
- a valuation engine (26) configured to access the second database to determine whether the second database has registered therein one or more second-type payment transactions having the same payor account as, and a later time than, a selected first-type payment transaction recorded in the first database, and derive and store valuation information based on a result of the determination.

2. The transaction authorization system of claim 1,
wherein the valuation engine (26) is configured to repeatedly submit a query in relation to the payor account identified in the selected first-type payment transaction to the second database (22).

3. The transaction authorization system of claim 2,
wherein the valuation engine (26) is configured to repeat submission of a query in relation to the payor account identified in the selected first-type payment transaction to the second database (22) for a predetermined number of times or until a predetermined period of time has elapsed.

4. The transaction authorization system of one of claims 1 to 3,
wherein each transaction record in the second database (22) includes a transaction request answer code, and wherein the valuation engine (26) is configured to access the second database to obtain information on the transaction request answer code of one or more registered second-type payment transactions determined as having the same payor account as, and a later time than, the selected first-type payment transaction.

5. The transaction authorization system of one of claims 1 to 4,
wherein each transaction record in the second database (22) includes a transaction amount, and wherein the valuation engine (26) is configured to access the second database to obtain information on the transaction amount of one or more registered second-type payment transactions determined as having the same payor account as, and a later time than, the selected first-type payment transaction.

6. The transaction authorization system of claim 5,
wherein each transaction record in the first database (24) includes a transaction amount, and wherein the valuation engine (26) is configured to compare the transaction amount of one or more registered second-type payment transactions determined as having the same payor account as, and a later time than, the selected first-type payment transaction with the transaction amount of the selected first-type payment transaction.

7. The transaction authorization system of one of claims 1 to 6,
wherein the valuation engine (26) is configured to access one or more stored checking parameters included in one or more predefined checking rules implemented in the authorization system and modify the accessed one or more checking parameters based on the valuation information.

8. The system of one of the preceding claims,
further comprising a host (14) configured to receive authorization requests for first-type payment transactions and second-type payment transactions, forward the authorization requests for first-type payment transactions to the authorization engine (18), and route the authorization requests for second-type payment transactions to a remote further transaction authorization system (20), wherein the host is coupled to the second database (22) and is configured to register a transaction record for every requested second-type payment transaction in the second database.

9. A method of operating a transaction authorization system, comprising the steps of:
- receiving a request for authorization of a first-type electronic payment transaction,
- performing an analysis in relation to the received authorization request based on the derived information,
- generating an authorization output based on the analysis,
- recording, in a first database, a transaction record in relation to one or more first-type payment transactions, each transaction record in the first database including a payor account identifier and time information,
- providing a second database storing a plurality of transaction records for second-type electronic payment transactions, each transaction record in the second database including a payor account identifier and time information,
- accessing the second database to determine whether the second database has registered therein one or more second-type payment transactions having the same payor account as, and a later time than, a selected first-type payment transaction recorded in the first database, and
- deriving and storing valuation information based on a result of the determination.

10. The method of claim 9,
wherein the step of accessing includes repeatedly submitting a query in relation to the payor account identified in the selected first-type payment transaction to the second database.

11. The method of claim 10,
wherein the step of accessing includes repeating submission of a query in relation to the payor account identified in the selected first-type payment transaction to the second database for a predetermined number of times or until a predetermined period of time has elapsed.

12. The method of one of claims 9 to 11,
wherein each transaction record in the second database includes a transaction request answer code, and wherein the step of accessing includes accessing the second database to obtain information on the transaction request answer code of one or more registered second-type payment transactions determined as having the same payor account as, and a later time than, the selected first-type payment transaction.

13. The method of one of claims 9 to 12,
wherein each transaction record in the second database includes a transaction amount, and wherein the step of accessing includes accessing the second database to obtain information on the transaction amount of one or more registered second-type payment transactions determined as having the same payor account as, and a later time than, the selected first-type payment transaction.

14. The method of claim 13,
wherein the step of recording includes recording a transaction amount in relation to each registered first-type payment transaction, and wherein the step of deriving includes comparing the transaction amount of one or more registered second-type payment transactions determined as having the same payor account as, and a later time than, the selected first-type payment transaction with the transaction amount of the selected first-type payment transaction.

15. The method of one of claims 9 to 14,
further including the steps of accessing one or more stored checking parameters included in one or more predefined checking rules and modifying the accessed checking parameter based on the valuation information.

16. The method of one of claims 9 to 15,
further including the steps of receiving, at a host (14), authorization requests for first-type payment transactions and second-type payment transactions, forwarding the authorization requests for first-type payment transactions to the authorization engine (18), routing the authorization requests for second-type payment transactions from the host (14) to a remote further transaction authorization system (20), and registering, by the host (14), a transaction record for every requested second-type payment transaction in the second database (22).

17. A computer-readable information storage medium, the medium storing program code means adapted to effect, when executed by a computer system, execution of a method as claimed in one of claims 9 to 15.

18. A signal transmitted in a communications system, the signal embodying program code means adapted to effect, when executed by a computer system, execution of a method as claimed in one of claims 9 to 15.
